# EUROPÄISCHE PATENTSCHRIFT

(11) **EP 0 306 895 B1**
(45) Veröffentlichungstag und Bekanntmachung des Hinweises auf die Patenterteilung: **07.12.1994**
(21) Anmeldenummer: 88114525.4
(22) Anmeldetag: 06.09.1988
(51) Int. Cl.: G01F 1/58

(54) **Verfahren zur Herstellung eines Messrohres für magnetisch-induktive Durchflussmessung**
Process for producing a measuring pipe for magnetic inductive rate of flow measurement
Procédé de fabrication d'un tuyau de mesure pour la mesure magnéto-inductive de débit

(30) Priorität: 11.09.1987 DE 3730641; 21.12.1987 DE 3743371
(43) Veröffentlichungstag der Anmeldung: 15.03.1989
(73) Patentinhaber: Endress + Hauser Flowtec AG, CH-4153 Reinach BL 1 (CH)
(72) Erfinder: Hafner, Peter, Dr., CH-4410 Liestal (CH); Unterseh, Roland, F-68300 St. Louis (FR)
(74) Vertreter: Morstadt, Volker, Dipl.-Ing.

(56) Entgegenhaltungen:
- EP-A- 0 142 048
- DE-A- 2 030 263
- US-A- 4 329 879

## Beschreibung

Die Erfindung betrifft Verfahren zum Herstellen von Messrohren magnetisch-induktiver Durchflußmesser.

Die bei der magnetisch-induktiven Durchflussmessung auftretende Messspannung ist u. a. abhängig vom Elektrodenabstand und der mittleren Strömungsgeschwindigkeit des das Messrohr durchfliessenden Mediums. Diese beiden Grössen werden wesentlich von den geometrischen Abmessungen des Messrohres beeinflusst, sodass deren möglichst hohe Stabilität anzustreben ist.

Zu diesem Zweck ist es bekannt, einen rohrförmigen Aussenteil, vorzugsweise eine Metallummantelung, vorzusehen, dessen zum Rohrinneren gerichtete Oberfläche im Spritzgiessverfahren mit Kunststoff beschichtet wird. Allerdings besitzt Kunststoff im allgemeinen im Vergleich zu Metallen einen hohen Wärmeausdehnungskoeffizienten sowie eine geringe mechanische Festigkeit, insbesondere gegenüber Zug, Druck oder Scherung.

Da diese Eigenschaften die geometrischen Abmessungen des Messrohrinneren und damit in unerwünschter Weise die Messspannung beinflussen können, soll die Metallummantelung die rohrförmige Kunststoffauskleidung formstabilisierend umfassen.

Kühlt nach Beendigung des Spritzgiessens die Kunststoff-Innenauskleidung ab, führt der hohe Wärmeausdehnungskoeffizient zu einem Schwund des Volumens der Innenauskleidung. Dieser Schwund führt leicht zu einer zumindest teilweisen Ablösung der Innenauskleidung von der Metallummantelung sowie zu dauerhaften mechanischen Spannungen im Kunststoff. Die Ablösungen verändern die geometrischen Abmessungen des Messrohrquerschnitts, was zu Verfälschungen der Messspannungen führen kann. Die nicht abgebauten mechanischen Spannungen erhöhen die Gefahr, dass im Kunststoff Risse entstehen.

Zwar ist es bekannt, die durch die Ablösung entstandenen Zwischenräume zwischen Metall-Ummantelung und Kunststoff-Innenauskleidung mit geeigneten Stoffen, z. B. Silikonkautschuk, auszufüllen, um so die Massstabilität des Messrohrquerschnitts zu gewährleisten. Jedoch ist es umständlich, den Füllstoff in die Zwischenräume einzubringen. Zudem ist es aufwendig, einen homogenen Innenquerschnitt zu bilden.

Aus der DE-A 20 30 263 ist ferner ein Verfahren zum Herstellen eines Meßrohrs eines magnetisch-induktiven Durchflußmessers bekannt, bei welchem Verfahren zunächst ein rohrförmiges, dessen Hohlraum begrenzendes Innenteil aus Kunststoff hergestellt wird und das Innenteil anschließend in ein Stahlrohr eingeschoben wird, das einen niedrigeren Wärmeausdehnungskoeffizienten und eine höhere mechanische Festigkeit als das Innenteil hat. Nach der US-A 43 29 879 können in das Kunststoff-Innenteil Versteifungsmittel eingebettet werden.

Eine andere als die eben erläuterte Klasse von magnetischinduktiven Durchflußmessern mit innen isoliertem Metall-Meßrohr sind solche mit keramischem Meßrohr und darauf aufgebrachten, kapazitiven Elektroden, die während des Brennens des Keramikrohrs mit eingebrannt bzw. danach aufgebracht werden, vgl. z. B. EP-A 142 048.

Die Erfindung, wie sie in den unabhängigen Ansprüchen 1 und 2 sowie den abhängigen Ansprüchen 3 bis 9 gekennzeichnet ist, löst das Problem, ein einfaches und kostengünstiges Herstellvervahren für Meßrohre magnetisch-induktiver Durchflußmesser mit hoher Formstabilität anzugeben.

Ein Vorteil der Erfindung besteht darin, daß sich das Innenteil nach dessen Herstellung mechanisch frei entspannen und ausreichend verfestigen kann. Dadurch wird die Wahrscheinlichkeit von späteren Rissen im Innenteil weitgehend vermieden. Die nachträgliche Beschichtung des Innenteils (vgl. DIN 8580), insb. durch elektrolytisches oder durch chemisches Abscheiden, durch Plasma- oder durch Flammspritzen, führt deshalb zu keiner spürbaren Verformung des Innenteilquerschnitts.

Zur Verwendung des Begriffs "Beschichten" wird auf DIN 8580 verwiesen (siehe etwa DIN-Taschenbuch 109, 1986, ISBN 3-410-11900-0, S.83), wo der Begriff wie folgt definiert und erläutert ist: "Beschichten ist Fertigen durch Aufbringen einer fest haftenden Schicht aus formlosem Stoff auf ein Werkstück. Maßgebend ist der unmittelbar vor dem Beschichten herrschende Zustand des Beschichtungsstoffes. Anmerkung: Im allgemeinen Sprachgebrauch werden Verfahren wie Plattieren, Aufkleben von Folien (Kaschieren) oder Furnieren oft fälschlicherweise dem Beschichten zugeordnet. Da hierbei die "Schicht" jedoch nicht aus formlosem Stoff erzeugt, sondern als ein geometrisch bestimmter Körper durch Schweißen, Löten oder Kleben mit dem Werkstück verbunden wird, gehören solche Verfahren ebenso wie z.B. das Tapezieren oder das Aufkleben von Fußbelägen zum Fügen".

Als Beschichtungsmaterial wird vorzugsweise nichtferromagnetisches Material verwendet. Mit den Beschichtungsverfahren wird eine feste Haftung des Aussenteils am Kunststoffinnenteil erreicht. Bevorzugte Materialien für den Innenteil sind Fluorkunststoffe, z. B. Teflon (PFA-Perfluoralkoxy) oder Hostaflon (ETFE-Aethylentetrafluoraethylen), die mit Kupfer oder Nikkel besonders vorteilhaft beschichtet werden können. Beschichtungsverfahren, insbesondere Galvanisieren, lassen sich kostengünstig für die Massenfertigung anwenden.

Das Aussenteil kann aus Schichten unterschiedlichen Materials zusammengesetzt werden. Dies erfolgt beispielsweise mittels verschiedener galvanischer Bäder. Dabei können durch zusätzliche Verwendung von an dem Innenteil angebrachten Abdeckungen funktionsangepasste Bereiche, z. B. für ferro-magnetische Polschuhe, chemisch beständige Elektroden mit vorzugsweise kapazitivem Abgriff und dergleichen, geschaffen werden. Insbesondere können bei Verwendung von Schichten unterschiedlichen Materials Bereiche unterschiedlicher Leitfähigkeit und/oder nichtleitende Bereiche geschaffen werden, die vorteilhaft der Behinderung von Wirbelströmen dienen.

Bei der Bildung des Aussenteils kann zunächst eine besonders fest am Kunststoff des Innenteils haftende Verbindungsschicht aufgebracht werden, auf der dann weitere Plasmaspritzschichten angeordnet werden.

Wegen weiterer Ausbildungen und deren Vorteile wird auf die Unteransprüche und die nachfolgende Erläuterung anhand der Zeichnung verwiesen. Darin zeigen

### Figur 1

das allgemeine Funktionsprinzip der magnetisch-induktiven Durchflussmessung;

### Figur 2

eine Draufsicht auf ein erfindungsgemäss hergestelltes Messrohr;

### Figur 3

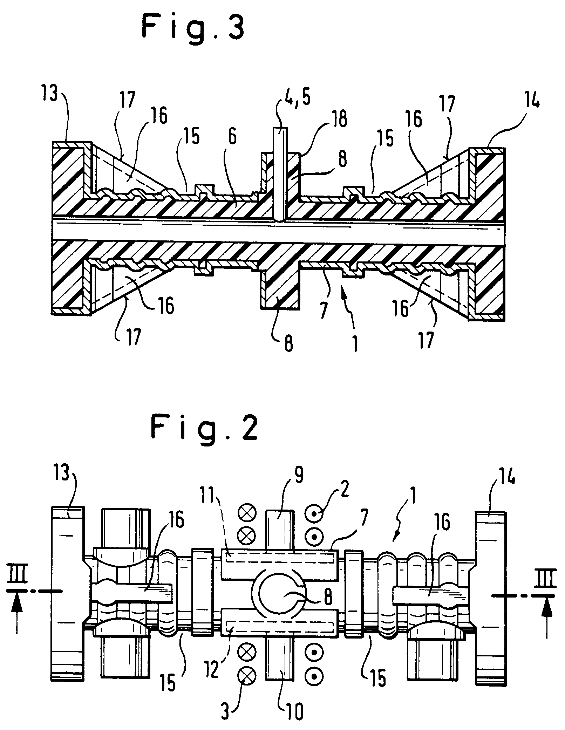

einen Schnitt durch das Messrohr gemäs der Linie III-III der Figur 2;

### Figur 4

eine teilweise geschnittene Draufsicht auf ein anderes erfindungsgemässes Messrohr; und

### Figur 5

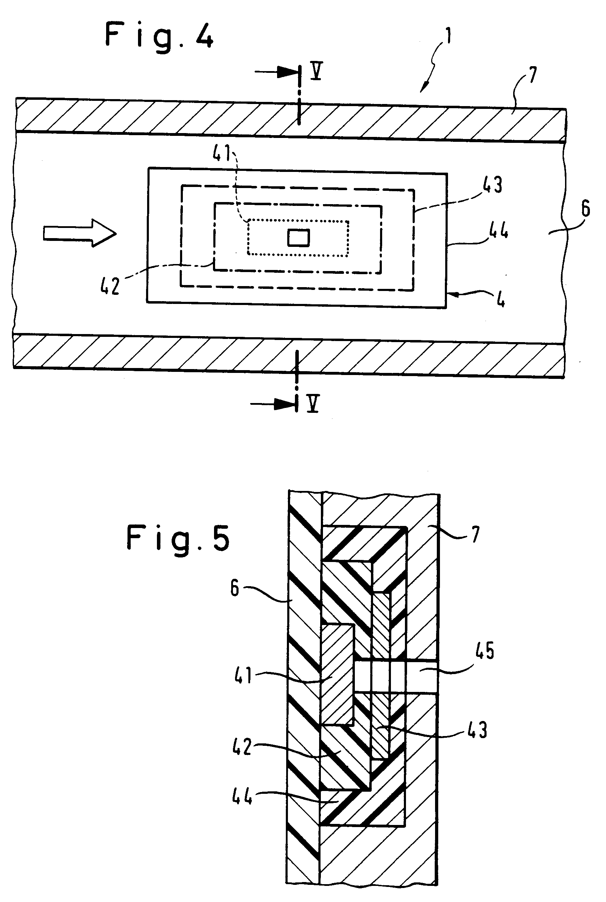

einen Schnitt durch die Wand des Messrohres entsprechend der Linie V-V in Figur 4.

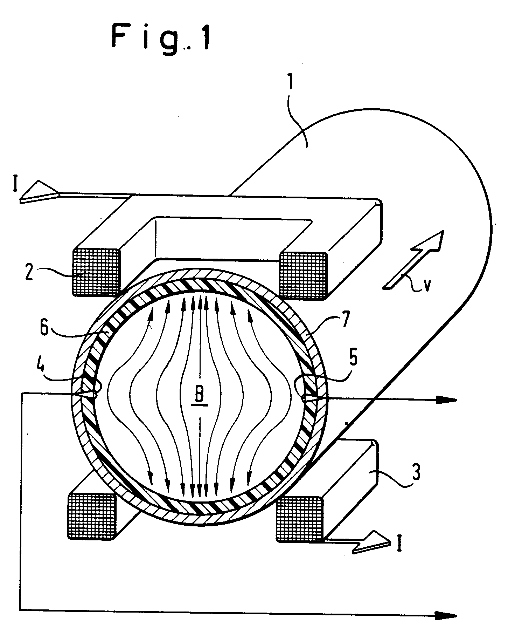

In den Figuren 1-5 übereinstimmende Bezugszeichen bezeichnen einander entsprechende Teile.

Ein magnetisch-induktiver Durchflussmesser ist gemäss Figur 1 prinzipiell wie folgt aufgebaut:

Durch ein Messrohr 1 strömt eine elektrisch leitende Flüssigkeit, deren volumetrischer Durchfluss bestimmt werden soll, mit der Geschwindigkeit v. Zwei mit dem Strom I durchflossene Erregerspulen 2, 3, die mit Wechsel- oder pulsierender Gleichspannung betrieben werden, erzeugen im Inneren des Messrohres 1 ein Magnetfeld B. Der Abgriff der induzierten Spannung erfolgt an zwei Elektroden 4, 5, die in der Wand des Messrohres 1 isoliert angebracht sind.

Das Messrohr 1 weist einen Innenteil 6 als Kunststoff-Innenauskleidung und einen Aussenteil 7, vorzugsweise ein rostfreies Stahlrohr, auf. Der Innenteil 6 hat die Funktion, das metallischen Aussenteil 7 vom elektrisch leitfähigen Strömungsmedium zu isolieren.

Figur 2 zeigt ein erfindungsgemäss hergestelltes Messrohr 1 in Draufsicht auf einen Elektrodenzapfen 8, der noch mit einer Bohrung zu versehen ist, um in diese eine Elektrode 4 oder 5 einzupressen. In der Zeichenebene erstreckt sich vom Messrohr 1 senkrecht zu dessen Längsachse ein Spulenkern 9 bzw. 10, um den Erregerspulen 2 bzw. 3 gewickelt sind.

Die Erregerspulen 2 bzw. 3 magnetisieren neben den Spulenkernen 9 bzw. 10 ferner Polschuhe 11 bzw. 12, die zwischen Innenteil 6 und Aussenteil 7 angeordnet sind. Dadurch wird der Vorteil erzielt, dass sich die Polschuhe 11, 12 nahe am zu messenden Strömungsmedium befinden und infolgedessen der magnetische Widerstand vermindert wird.

Die Enden des Messrohres 1 sind zu Befestigungsflanschen 13 bzw. 14 ausgebildet. In die nach aussen gerichtete Oberfläche des Messrohres sind zudem nutenförmige Vertiefungen 15 eingelassen. Gemäss Figur 3 ist das Messrohr 1 durch flächig ausgeformte Stege 16 versteift, deren Aussenränder 17 sich von den Flanschen 13, 14 zur Aussenoberfläche des Messrohres 1 erstrecken. Ferner ist in Figur 3 dargestellt, dass durch teilweises Entfernen des Aussenteils 7 im Bereich eines Elektrodenzapfens 8 und dessen nachträgliches Bearbeiten in einfacher Weise Schirmhülsen 18 für die Elektroden 4, 5 gebildet werden können.

Anhand des in Figur 2 und 3 dargestellten erfindungsgemässen Herstellungsprodukts wird deutlich: Sind Innenteil 6 entsprechend ausgebildet und Aussenteil 7 bereits im wesentlichen aufgebracht, so können in einer weiteren Stufe der Nachbearbeitung des Aussenteils 7 die genannten funktionsbezogenen Elemente (Elektrodenzapfen 8, Spulenkerne 9, 10, Polschuhe 11, 12, Flansche 13, 14, Nuten 15, Versteifungsstege 16, Schirmhülsen 18) und dergleichen in einfacher Weise durch bereichsweises Entfernen des Aussenteils 7 realisiert werden.

Nach einer anderen Variante der Erfindung können Elektroden mit kapazitivem Abgriff vorteilhaft in die Herstellung des Messrohres einbezogen werden. Dies ist in den Figuren 4 und 5 verdeutlicht, wobei Figur 5 eine nicht massstabsgetreue, vergrösserte Schnittdarstellung gemäss der Linie V-V in Figur 4 ist. Danach wird zur Bildung der Elektroden 4 zunächst auf einen Abschnitt der Oberfläche des Innenteils 6 eine erste elektrische Leitschicht 41 aufgebracht (in Figur 4 punktiert angedeutet). Diese erste Leitschicht 41 bildet im Messbetrieb die eine Platte eines Kondensators, dessen Dielektrikum das nichtleitende Innenteil 6 ist und dessen andere Platte das elektrisch leitfähige Medium ist, das in Richtung des Pfeiles der Figur 4 durch das Messrohr 1 fliesst.

Die erste Leitschicht 41 wird dann mit einer ersten Isolierschicht 42 zumindest teilweise beschichtet, auf welche dann - als Schirmelektrode insbesondere gegen Streukapazitäten - eine zweite elektrische Leitschicht 43 zumindest teilweise aufgebracht wird. Diese wird zweckmässig auf Masse- bzw. Erdpotential gelegt, was über eine weitere nicht gezeichnete Leitschicht erfolgen kann. Wird schliesslich die zweite Leitschicht 43 noch mit einer zweiten Isolierschicht 44 beschichtet, dann kann als Material für das formstabilisierenden Aussenteil 7 z. B. Kupfer verwendet werden. Die Erstreckung der beiden Isolierschichten 42, 44 kann wahlweise auf die von der ersten und/oder zweiten Leitschicht 41 bzw. 43 gebildeten Bereiche begrenzt sein oder die gesamte Aussenfläche des Messrohres 1 umfassen.

Nach der besonderen Ausbildung gemäss Figur 4 und 5 weisen die erste und zweite Isolierschicht 42 bzw. 44 sowie die zweite Leitschicht 43 jeweils miteinander fluchtende Aussparungen auf, die zusammen eine zur ersten Leitschicht 41 führende Oeffnung bilden. Dadurch lässt sich die erste Leitschicht 41 (Messelektrode) einfach kontaktieren. Entsprechend der anhand Figur 4 und 5 beschriebenen Vorgehensweise können noch weitere elektrisch leitfähige und weitere isolierende Schichten aufgebracht werden. Wird von den weiteren Leitschichten wenigstens eine auf beispielsweise Masse- oder Erdpotential gelegt, so verbessert sich die Schirmung der Messelektrode - unter gleichzeitiger Entlastung bzw. elektrischer Entspannung der obigen Schirmelektrode.

Das Ausführungsbeispiel gemäss Figur 4 und 5 macht deutlich, dass sich das erfindungsgemässe Herstellungsverfahren besonders für Messrohre mit kapazitiven Elektroden eignet. Denn die Struktur kapazitiver Elektroden wird im wesentlichen durch einander überdeckende Schichten (Dielektrikum, Kondensatorplatte, Isolation, Schirmelektrode usw.) gebildet, die im Zusammenhang mit der Erfindung leicht angebracht werden können.

## Patentansprüche

1. Verfahren zum Herstellen eines Meßrohrs (1) eines magnetisch-induktiven Durchflußmessers, bei welchem Verfahren
- zunächst ein rohrförmiges, den Hohlraum des Meßrohres begrenzendes Innenteil (6) aus Kunststoff mit angeformten Elektrodenzapfen (8) hergestellt und mechanisch entspannt wird,
- das Innenteil (6) anschließend mindestens teilweise mit einem formstabilisierenden Außenteil (7) durch Beschichtung mit einem anderen Material fest haftend umgeben wird, das einen niedrigeren Wärmeausdehnungskoeffizienten und eine höhere mechanische Festigkeit als das Material des Innenteils (6) hat, und
- in jeden Elektrodenzapfen (8) eine Elektrode (4, 5) zum galvanischen Abgriff eingepreßt wird.

2. Verfahren zum Herstellen eines Meßrohrs (1) eines magnetisch-induktiven Durchflußmessers, bei welchem Verfahren
- zunächst ein rohrförmiges, den Hohlraum des Meßrohres begrenzendes Innenteil (6) aus Kunststoff hergestellt und mechanisch entspannt wird,
- auf mindestens einem Teil der nach außen gerichteten Oberfläche des Innenteils (6) eine erste elektrische Leitschicht (41) aufgebracht wird, die eine Meßelektrode zum kapazitiven Abgriff bildet,
- auf die erste Leitschicht (41) eine erste Isolierschicht (42) mindestens teilweise aufgebracht wird,
- auf die erste Isolierschicht (42) eine zweite Leitschicht (43) mindestens teilweise aufgebracht wird,
- auf die zweite Leitschicht (43) eine zweite Isolierschicht (44) aufgebracht wird, und
- das so beschichtete Innenteil (6) mindestens teilweise mit einem formstabilisierenden Außenteil (7) durch Beschichtung mit einem anderen Material fest haftend umgeben wird, das einen niedrigeren Wärmeausdehnungskoeffizienten und eine höhere mechanische Festigkeit als das Material des Innenteils (6) hat.

3. Verfahren nach Anspruch 2, bei dem auf die zweite Isolierschicht (44) mindestens eine weitere elektrische Leitschicht, von denen mindestens eine auf ein elektrisches Potential insb. Massepotential eines Verstärkers, gelegt wird, und mindestens eine weitere Isolierschicht aufgebracht werden.

4. Verfahren nach Anspruch 2 oder 3, bei dem die Isolierschichten derart mit Ausnehmungen versehen werden, daß mindestens eine Leitschicht von außen kontaktiert werden kann.

5. Verfahren nach einem der Ansprüche 1 bis 4, bei dem das Innenteil (6) aus mehreren Kunststoffteilen zusammengesetzt wird.

6. Verfahren nach einem der Ansprüche 1 bis 5 mit einem Innenteil (6) aus Fluorkunststoff.

7. Verfahren nach einem der Ansprüche 1 bis 6 mit einem Außenteil (7) aus Kupfer.

8. Verfahren nach einem der Ansprüche 1 bis 7, bei dem das Außenteil (7) nach dem Aufbringen nachbearbeitet und ausgeformt wird.

9. Verfahren nach einem der Ansprüche 1 bis 8, bei dem beim Aufbringen des Außenteils (7) mindestens eine funktionsbezogene Baugruppe eingebunden wird.

## Claims

1. A method of making a measuring tube (1) of a magnetic flow meter, in which method
- a tubular inner member (6) of plastic which bounds the cavity of the measuring tube and has electrode projections formed integrally thereon is first produced and stress-relieved,
- the inner member (6) is subsequently surrounded, at least in part, with a form-stabilizing, firmly adhering outer member (7) by being coated with another material which has a lower coefficient of thermal expansion and a higher mechanical strength than the material of the inner member (6), and
- an electrode (4, 5) providing an electrical tap is pressed into each electrode projection (8).

2. A method of making a measuring tube (1) of a magnetic flow meter, in which method
- a tubular inner member (6) of plastic which bounds the cavity of the measuring tube is first produced and stress-relieved,
- a first electrically conducting layer (41) is deposited on at least a portion of the outwardly directed surface of the inner member (6) to form a measuring electrode providing a capacitive tap,
- a first insulating layer (42) is deposited on at least a portion of the first conducting layer (41),
- a second conducting layer (43) is deposited on at least a portion of the first insulating layer (42),
- a second insulating layer (44) is deposited on the second conducting layer (43), and
- the inner member (6) so coated is surrounded, at least in part, with a form-stabilizing, firmly adhering outer member (7) by being coated with another material which has a lower coefficient of thermal expansion and a higher mechanical strength than the material of the inner member (6).

3. A method as claimed in claim 2 wherein at least one further electrically conducting layer, of which at least one is connected to an electric potential, particularly to ground potential of an amplifier, and at least one further insulating layer are deposited on the second insulating layer (44).

4. A method as claimed in claim 2 or 3 wherein the insulating layers are provided with openings so that at least one conducting layer can be contacted from outside.

5. A method as claimed in any one of claims 1 to 4 wherein the inner member (6) is composed of several plastic parts.

6. A method as claimed in any one of claims 1 to 5 with an inner member (6) of fluoroplastics.

7. A method as claimed in any one of claims 1 to 6 with an outer member (7) of copper.

8. A method as claimed in any one of claims 1 to 7 wherein after its deposition, the outer member (7) is remachined and shaped.

9. A method as claimed in any one of claims 1 to 8 wherein during the deposition of the outer member (7), at least one function-related subassembly is incorporated.

## Revendications

1. Procédé pour fabriquer un tube de mesure (1) d'un débitmètre à induction magnétique, procédé dans lequel
- on fabrique d'abord et on soumet à une détente mécanique une pièce intérieure (6) en plastique, tubulaire, délimitant le volume intérieur du tube de mesure, et munie de tourillons d'électrode (8),
- ensuite, au moins partiellement, on entoure la pièce intérieure (6) d'une pièce extérieure (7), assurant un caractère indéformable, par revêtement, bien adhérent, d'un autre matériau, pièce extérieure qui a un coefficient de dilatation thermique plus faible et une résistance mécanique plus grande que le matériau de la pièce intérieure (6), et
- on enfonce dans chaque tourillon d'électrode (8) une électrode (4, 5) pour assurer la prise galvanique.

2. Procédé pour fabriquer un tube de mesure (1) d'un débitmètre à induction magnétique, procédé dans lequel
- on fabrique d'abord et on soumet à une détente mécanique une pièce intérieure (6) en plastique, tubulaire, délimitant le volume intérieur du tube de mesure, et à laquelle sont rapportés des tourillons d'électrode (8),
- sur au moins une partie de la surface de la pièce intérieure (6) dirigée vers l'extérieur, on applique une première couche électroconductrice (41), qui forme une électrode de mesure pour assurer la prise capacitive,
- au moins partiellement, on applique sur la première couche conductrice (41) une première couche isolante (42),
- au moins partiellement, on applique sur la première couche isolante (42) une deuxième couche isolante (43),
- on applique sur la deuxième couche isolante (43) une deuxième couche isolante (44), et
- on entoure au moins partiellement la pièce intérieure (6) ainsi revêtue, d'une pièce extérieure (7), assurant un caractère indéformable, par revêtement, bien adhérent, d'un autre matériau, lequel a un coefficient de dilatation thermique plus faible et une résistance mécanique plus grande que le matériau de la pièce intérieure (6).

3. Procédé selon la revendication 2, dans lequel on applique sur la deuxième couche isolante (44) au moins une autre couche électroconductrice, au moins l'une des couches étant mise à un potentiel électrique, en particulier au potentiel de masse d'un amplificateur, et on applique au moins une couche isolante supplémentaire.

4. Procédé selon la revendication 2 ou 3, dans lequel les couches isolantes sont pourvues d'évidements de façon qu'au moins une couche conductrice puisse être en contact avec elles à partir de l'extérieur.

5. Procédé selon l'une des revendications 1 à 4, dans lequel la pièce intérieure (6) est constituée de plusieurs pièces plastiques.

6. Procédé selon l'une des revendications 1 à 5, avec une pièce intérieure (6) en plastique fluoré.

7. Procédé selon l'une des revendications 1 à 6, avec une pièce extérieure (7) en cuivre.

8. Procédé selon l'une des revendications 1 à 7, dans lequel la pièce extérieure (7), après application, subit un post-usinage et un austéniformage.

9. Procédé selon l'une des revendications 1 à 8, dans lequel, lors de l'application de la pièce extérieure (7), on intègre au moins un sous-ensemble fonctionnel.
